# EUROPEAN PATENT APPLICATION

(11) **EP 3 187 782 A1**
(43) Date of publication of application: **05.07.2017**
(21) Application number: 16205332.6
(22) Date of filing: 20.12.2016
(51) Int. Cl.: F23J 15/00, F23K 5/12, F23R 3/28

(54) **SYSTEMS AND METHODS FOR MITIGATING THE IMPACT OF VANADIUM IN HEAVY FUEL OIL**

(30) Priority: 31.12.2015 US 201514985468
(71) Applicant: General Electric Company, Schenectady, NY 12345 (US)
(72) Inventor: SCIPIO, Alston Ilford, Atlanta, GA Georgia 30339 (US); TRAYHAN, David, Greenville, SC South Carolina 29615 (US); EKANAYAKE, Sanji, Atlanta, GA Georgia 30339 (US)
(74) Representative: Lee, Brenda

(57) **Abstract**

The present application provides a gas turbine engine for combusting a flow of heavy fuel oil (110) with vanadium contaminates therein. The gas turbine engine (10) may include a combustor (25) for combusting the flow of heavy fuel oil (110), an upstream magnesium mixing system (230) for mixing a flow of magnesium (240) with the flow of heavy fuel oil (110), a turbine, an air extraction system in communication with the turbine, and a downstream magnesium mixing system (410) for providing the flow of magnesium (240) to the air extraction system.

## Description

### TECHNICAL FIELD

The present application and the resultant patent relate generally to gas turbine engines and more particularly relate to systems and methods for mitigating the impact of metallic impurities such as vanadium and the like during combustion of heavy fuel oil in gas turbine engines.

### BACKGROUND OF THE INVENTION

Heavy duty gas turbines may operate on natural gas, light crude oil, heavy fuel oil, residual fuel oil, and other types of low grade combustible liquid fuels (referred to herein as heavy fuel oil). Such low grade fuels may be relatively inexpensive but such fuels may contain undesirable contaminants such as vanadium and other types of metallic compounds. For example, vanadium reacts during combustion of heavy fuel oil to form undesirable corrosive compounds such as vanadium oxide (V₂0₅). These vanadium compounds may form hard corrosive composites such as ash and the like. Over time, this ash may distort the shape of the turbine blades, nozzles, and other types of hot gas path components so as to reduce hot gas path component lifetime as well as overall gas turbine performance, availability, and maintenance.

Magnesium based compounds may be added to the flow of the heavy fuel oil so as to mitigate the corrosive effects of the vanadium. Magnesium may form relatively low melting temperature alloys with the vanadium. These magnesium alloys may be removed more easily from the surface of the turbine nozzles, buckets, and other hot gas path components. Known methods for adding magnesium to the flow of heavy fuel oil, however, may result in a non-homogeneous mixture of the protective magnesium in the fuel stream and/or an over injection of the magnesium. Consequently, the current methods may yield less than optimal corrosion protection of the hot gas path components such as the turbine nozzles and buckets downstream of the combustion zone. This partial or non-treatment of the later turbine stage components may result in an overall reduced efficiency and output. Moreover, the gas turbine engine may require downtime from service so as to remove and replace the affected parts.

### SUMMARY OF THE INVENTION

The present application and the resultant patent thus provide a gas turbine engine for combusting a flow of hydrocarbon based liquid fuel with vanadium contaminants therein. The gas turbine engine may include a combustor for combusting the flow of hydrocarbon based liquid fuel, an upstream magnesium mixing system for mixing a flow of magnesium with the flow of hydrocarbon based liquid fuel, a turbine, an air extraction system in communication with the turbine, and a downstream magnesium mixing system for providing the flow of magnesium to the air extraction system.

The present application and the resultant patent further provide a method of limiting the impact of vanadium in a flow of heavy fuel oil during combustion in a gas turbine engine. The method may include the steps of determining a nature of the vanadium in the flow of heavy fuel oil, mixing a flow of magnesium and the flow of heavy fuel oil, combusting the mixed flow of magnesium and heavy fuel oil, and injecting a further flow of magnesium into a turbine of the gas turbine engine.

The present application and the resultant patent further provide a magnesium dispensing and mixing system for protecting a turbine when combusting a flow of heavy fuel oil with vanadium contaminants therein. The magnesium dispensing and mixing system may include a vanadium sensor in communication with the flow of heavy fuel oil, a flow of magnesium, a flow of water, a magnesium mixing chamber, and an air extraction system in communication with the magnesium mixing chamber and the turbine.

These and other features and improvements of the present application and the resultant patent will become apparent to one of ordinary skill in the art upon review of the following detailed description when taken in conjunction with the several drawings and the appended claims.

### BRIEF DESCRIPTION OF THE DRAWINGS

Fig. 1 is a schematic diagram of a gas turbine engine showing a compressor, a combustor, a turbine, and a load.
Fig. 2 is a partial sectional view of the compressor and the turbine of Fig. 1 with an air extraction system.
Fig. 3 is a schematic diagram of fuel delivery system with an upstream magnesium mixing system and a downstream magnesium mixing system as may be described herein.
Fig. 4 is a schematic diagram of a control system for use with the downstream magnesium mixing system of Fig. 3.

### DETAILED DESCRIPTION

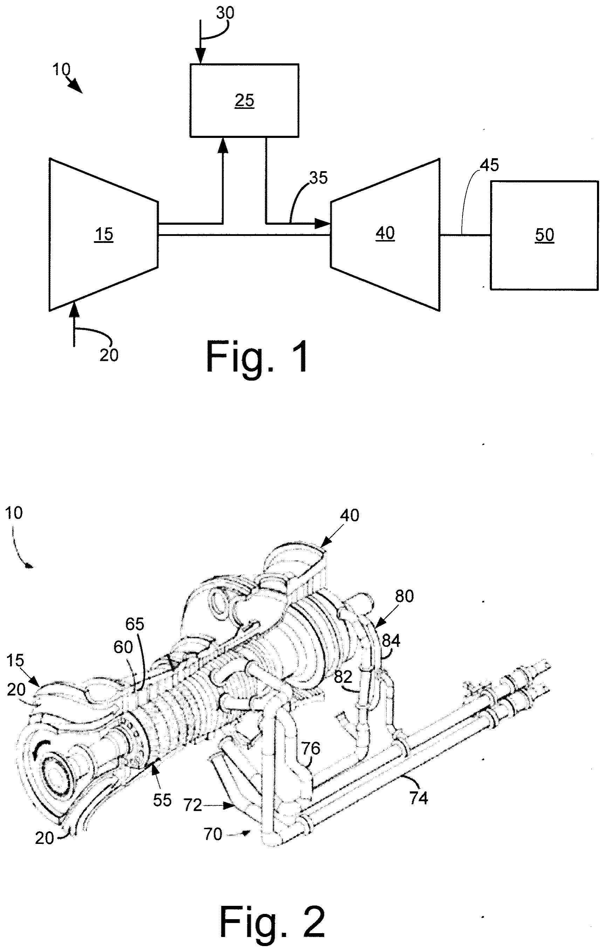

Referring now to the drawings, in which like numerals refer to like elements throughout the several views, Fig. 1 shows a schematic diagram of a gas turbine engine 10 as may be used herein. The gas turbine engine 10 may include a compressor 15. The compressor 15 compresses an incoming flow of air 20. The compressor 15 delivers the compressed flow of air 20 to a combustor 25. The combustor 25 mixes the compressed flow of air 20 with a pressurized flow of fuel 30 and ignites the mixture to create a flow of combustion gases 35. Although only a single combustor 25 is shown, the gas turbine engine 10 may include any number of combustors 25 positioned in a circumferential array or silo type combustors and the like. The flow of combustion gases 35 is in turn delivered to a turbine 40. The flow of combustion gases 35 drives the turbine 40 so as to produce mechanical work. The mechanical work produced in the turbine 40 drives the compressor 15 via a shaft 45 and an external load 50 such as an electrical generator and the like.

The gas turbine engine 10 may use natural gas, various types of syngas, liquid fuels such as heavy fuel oil, and/or other types of fuels and blends thereof. The gas turbine engine 10 may be any one of a number of different gas turbine engines offered by General Electric Company of Schenectady, New York, including, but not limited to, those such as a 7 or a 9 series heavy duty gas turbine engine and the like. The gas turbine engine 10 may have different configurations and may use other types of components. Other types of gas turbine engines also may be used herein. Multiple gas turbine engines, other types of turbines, and other types of power generation equipment also may be used herein together.

Fig. 2 shows portions of the compressor 15 and the turbine 40 in greater detail. The compressor 15 may include a number of stages 55. Any number of stages 55 may be used herein with the area of each stage 55 getting progressively smaller. Each stage 55 may include a number of circumferentially arranged rotating blades 60. Any number of the blades 60 may be used. Each stage 55 also may include a number of circumferentially arranged stationary vanes 65. Any number of the vanes 65 may be used. The flow of air 20 may enter the compressor 15 and may be compressed through the blades 60 and the vanes 65 of each stage 55.

The gas turbine engine 10 also may include an air extraction system 70. The air extraction system 70 may extract a portion of the flow of air 20 from the compressor 15 for use in cooling the turbine 40 and for other purposes. The air extraction system 70 may include compressor section air extraction piping 72. By way of example only, the compressor section air extraction piping 72 may include ninth stage compressor air extraction piping 74 and thirteenth stage compressor air extraction piping 76 extending from the ninth stage and the thirteenth stage respectively of the compressor 15. The air extraction system 70 also may include turbine section cooling air piping 80. The turbine section cooling air piping 80 may include second stage or latter turbine cooling air piping 82 and third stage or latter cooling air piping 84 in communication with the second stage, the third stage, or latter stages respectively of the turbine 40. The ninth stage compressor air extraction piping 74 may be in communication with the third stage or latter cooling air piping 84 while the thirteenth stage compressor air extraction piping 76 may be in communication with the second stage or latter turbine cooling air piping 82. Extractions from other stages of the compressor 15 and/or to other stages of the turbine 40 also may be used. Other types and other configurations of air extraction systems 70 may be used.

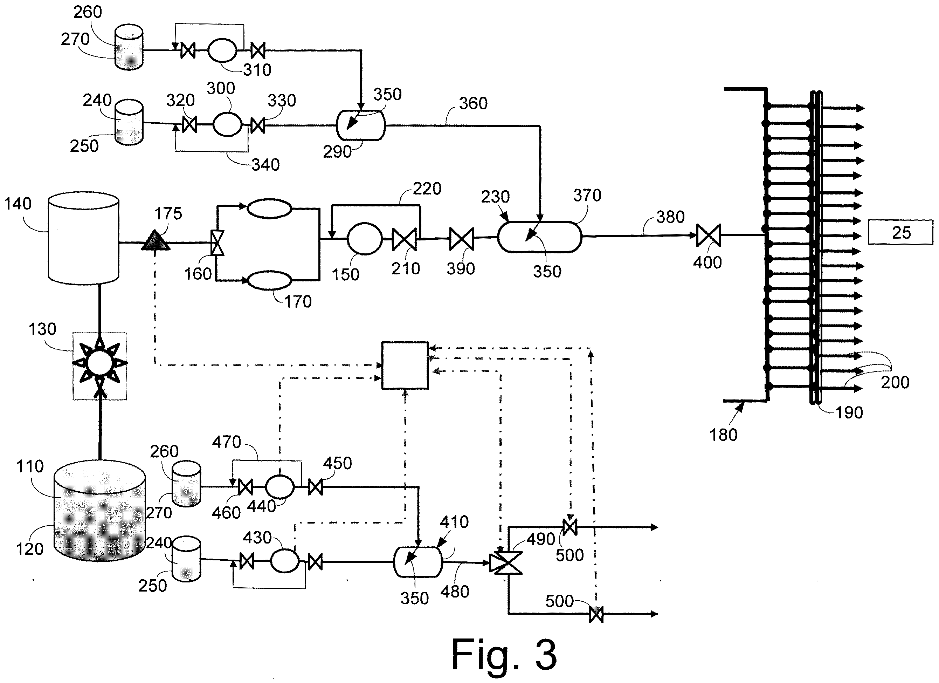

Fig. 3 shows an example of a heavy fuel oil delivery system 100 as may be described herein. The heavy fuel oil delivery system 100 may be used with the combustors 25 of the gas turbine engine 10 as described above and the like. The heavy fuel oil delivery system 100 may deliver a flow of the heavy fuel oil 110 and the like to the combustors 25 for combustion therein. Other types of hydrocarbon based liquid fuels as well as low grade fuels including residual fuel oil and the like also may be used herein. As described above, the flow of heavy fuel oil 110 may include contaminants such as vanadium and the like therein in varying amounts.

The heavy fuel oil 110 may be stored in a raw fuel tank 120. The raw fuel tank 120 may have any suitable size, shape, or configuration. The heavy fuel oil 110 may undergo a processing step downstream of the raw fuel tank 120 in a centrifuge 130 or other type of separation device. The centrifuge 130 may remove heavier impurities as well as water, solvents, absorbents, and the like. The centrifuge 130 may be of conventional design. The heavy fuel oil 110 may be stored in a clean fuel tank 140. The clean fuel tank 140 may have any suitable size, shape, or configuration. The heavy fuel oil 110 may undergo processing steps before or after the raw fuel tank 120 and/or the clean fuel tank 140 in addition to those described herein.

The fuel delivery system 100 may include a main fuel pump 150 downstream of the clean fuel tank 140. The main fuel pump 150 may be of conventional design. The main fuel pump 150 may be in communication with the clean fuel tank 140 via one or more selection valves 160 and filters 170. The selection valve 160 may be a conventional three way valve and the like. The filters 170 may further remove contaminants from the flow of the heavy fuel oil 110 in the form of particulates and the like. A vanadium sensor 175 also may be positioned downstream of the clean fuel tank 140. The vanadium sensor 175 may determine the volume or the concentration of vanadium in the flow of the heavy fuel oil 110. Other types of parameters regarding the nature of the vanadium and/or the flow of heavy fuel oil 110 also may be determined. The vanadium sensor 175 may be of conventional design. Other types of sensors also may be used herein.

A flow divider 180 may be positioned downstream of the main fuel pump 150. The flow divider 180 may divide the flow of the heavy fuel oil 110 according to the number of combustors 25 in use. The flow divider 180 may include a number of manifolds 190 and a number of outgoing fuel lines 200 in communication with the combustors 25. Although nineteen (19) outgoing fuel lines 200 are shown, any number of the fuel lines 200 may be used herein. A stop valve 210 and a bypass line 220 may be positioned between the main fuel pump 150 and the flow divider 180. Other components and other configurations may be used herein.

The fuel delivery system 100 also may include an upstream magnesium mixing system 230 as may be described herein. The upstream magnesium mixing system 230 many include a volume of magnesium 240 stored in a magnesium tank 250. Specifically, a water based magnesium sulphite emulsion and the like may be used. Other types of vanadium reactive chemicals or other types of chemical inhibitors may be used herein in varying concentrations and/or volumes. The magnesium tank 250 may have any suitable size, shape, or configuration. The upstream magnesium mixing system 230 also may include a volume of a carrier fluid 260 such as water or diesel/oil stored in a carrier tank 270. The carrier tank 270 may have any suitable size, shape, or configuration. Other types of carrier fluids 260 may be used herein in any suitable volume. Other components and other configurations may be used herein.

The magnesium mixing system 230 may include an upstream magnesium mixing chamber 290. The magnesium tank 250 may be in communication with the upstream magnesium mixing chamber 290 via an upstream magnesium pump 300 and the carrier tank 270 may be in communication with the upstream magnesium mixing chamber 290 via an upstream water pump 310. The pumps 300, 310 may be positive displacement and/or high head pumps and the like. A number of stop valves 320, check valves 330, bypass lines 340, and the like also may be used. The upstream magnesium mixing chamber 290 may include a number of angled counter flow nozzles 350 for the flow of magnesium 240. The flow of magnesium 240 may be injected at an angle via the angled counter flow nozzles 350 into the incoming water flow 260 for good mixing therein without the use of moving parts. Good mixing also may be promoted by injecting the flow of magnesium 240 into the upstream magnesium mixing chamber 290 at a higher pressure as compared to the water flow 260. The upstream magnesium mixing chamber 290 may have any suitable size, shape, or configuration. An upstream mixed magnesium flow 360 thus may exit the upstream magnesium mixing chamber 290. Other components and other configurations also may be used herein.

The upstream magnesium mixing system 230 also may include a heavy fuel oil mixing chamber 370. The heavy fuel oil mixing chamber 370 may be positioned between the main fuel pump 150 and the flow divider 180, preferably immediately upstream of the flow divider 180 although other positions may be used herein. The heavy fuel oil mixing chamber 370 may be similar to the upstream magnesium mixing chamber 290 described above and may include the angled counter flow nozzles 350 therein without the use of moving parts. The heavy fuel oil mixing chamber 370 may have any suitable size, shape, or configuration. The use of the angled counter flow nozzles 350 also promotes good mixing of the fluids therein. The upstream mixed magnesium flow 360 also may be injected under higher pressure than the heavy fuel oil flow 110. The heavy fuel oil mixing chamber 370 thus mixes the heavy fuel oil flow 110 and the upstream mixed magnesium flow 360 with the magnesium therein. A homogeneous flow 380 thus may exit the heavy fuel oil mixing chamber 370 and flow towards the flow divider 180 and the combustors 25 of the gas turbine engine 10. Various types of flow control valves 390, stop valves 400, check valves 410, and the like also may be used. Other components and other configurations also may be used herein.

The various valves and pumps described herein may control and regulate the delivery and distribution of the anti-corrosive magnesium additives into the water flow, the water flow with the anti-corrosive magnesium additives into the heavy fuel oil, and the anti-corrosive magnesium additives into the heavy fuel oil to form a homogeneous solution. Other fluid combinations may be used herein.

Positioning the heavy fuel oil mixing chamber 370 just upstream of the flow divider 180 thus provides minimal residence time for mixture separation or heavy fuel oil constituent dropout. Likewise, using water as the carrier fluid 260 improves the mixing process with the heavy fuel oil 110 so as to provide the homogeneous flow 380. The homogeneous flow 380 promotes an adequate delivery of the protective flow of magnesium 240. The flow of magnesium 240 thus combines with the vanadium and the like within the heavy fuel oil 110 to produce a soft ash that may be washed off of the hot gas path components during routine maintenance and the like. The homogeneous flow 380 thus reduces the level of hot gas path component corrosion that may be attributable to vanadium so as to improve overall reliability and availability of the gas turbine engine 10.

The fuel delivery system 100 also may include a downstream magnesium mixing system 410. The downstream magnesium mixing system 410 may use a flow of the magnesium 240 stored in the magnesium tank 250. A further and/or a separate magnesium tank 250 also may be used herein. The downstream magnesium mixing system 410 may use a flow of the water 260 stored in the carrier tank 270. A further and/or a separate carrier tank 270 also may be used herein. The downstream magnesium mixing system 410 may include a downstream magnesium mixing chamber 420. The magnesium tank 250 may be in communication with the downstream magnesium mixing chamber 420 via a downstream magnesium pump 430 and the carrier tank 270 may be in communication with the downstream magnesium mixing chamber 420 via a downstream water pump 440. A number of stop valves 450, check valves 460, bypass lines 470, and the like also may be used. The downstream mixing chamber 420 may include a number of the downstream angled counter flow nozzles 350 for the flow of magnesium 240. The flow of magnesium 240 may be injected at an angle via the downstream angled counter flow nozzles 350 into the incoming water flow 260 for good mixing therein without the use of moving parts. Good mixing also may be promoted by injecting the flow of magnesium 240 into the downstream magnesium mixing chamber 420 at a higher pressure as compared to the flow of water 260. The downstream magnesium mixing chamber 420 may have any suitable size, shape, or configuration. A downstream mixed magnesium flow 480 thus may exit the downstream magnesium mixing chamber 420. Other components and other configurations also may be used herein.

The downstream mixed magnesium flow 480 may be in communication with the second stage turbine or latter cooling air piping 82 and the third stage or latter cooling air piping 84. The flow to the cooling air piping 82, 84 may be controlled via a flow control valve 490 and the like. The flow control valve 490 may vary the flow of the downstream mixed magnesium flow 480 to either or both of the cooling air piping 82, 84. One or more check valves 500 also may be used downstream of the flow control valve 490. Other components and other configurations also may be used herein.

The downstream magnesium mixing system 410 thus provides the downstream mixed magnesium flow 480 to the downstream stages of the turbine 40 for improved vanadium protection and removal during off lime water washing procedures and otherwise via the air extraction system 70. The volume of the downstream mixed magnesium flow 480 delivered to the downstream turbine stages may depend upon the volume or concentration of the vanadium in the flow of heavy fuel oil 110 as determined by the vanadium sensor 175 or otherwise. The downstream magnesium mixing system 410 thus assists in providing an adequate volume of the downstream mixed magnesium flow 480 to the turbine 40 as needed without the need for excessive flows.

Operation of the fuel delivery system 100 in general and the magnesium mixing systems 230, 410 in particular may be provided by a controller 510. The controller 510 may be any type of programmable micro-controller and the like utilizing predetermined logic and sequence to control valves and dispensation of magnesium into heavy fuel oil. The controller 510 may control the overall gas turbine engine 10 and/or the controller 510 may be specific to the turbine magnesium mixing systems 230, 410. An example of the controller 510 is the "Speedtronic^{™}" gas turbine controller provided by General Electric Company of Schenectady, New York.

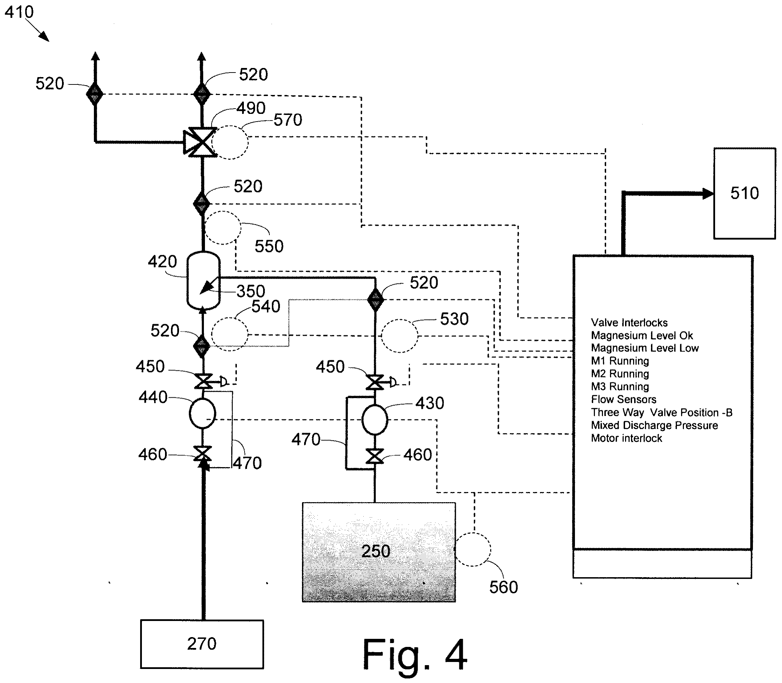

Fig. 4 shows the operation of the controller 510 with respect to the downstream magnesium mixing system 410 in greater detail. In addition to the vanadium sensor 175, other types of sensors also may be in communication with the controller 510. For example, a number of flow sensors 520 may be positioned upstream and downstream of the downstream magnesium mixing chamber 420 as well as downstream from the downstream flow control valve 490. Likewise, a magnesium pressure sensor 530 and a water pressure sensor 540 may be positioned upstream of the downstream turbine magnesium mixing chamber 420 as well as an output sensor 550 positioned downstream of the downstream magnesium mixing chamber 420. The magnesium tank 250 also may include a level sensor 560 therein. A flow control valve sensor 570 may ensure the correct position of the flow control valve 490. A control panel/display 580 may be in communication with the controller 510. The control panel/display 580 may indicate the position of the various valves, the level of magnesium, whether the respective pumps are running, input from the flow sensors, input from the pressure sensors, and the position of the various valves to ensure optimum operation. Other types of operational parameters also may be monitored herein. Other components and other configurations may be used herein.

Based upon the volume and/or concentration of vanadium in the flow of the heavy fuel oil 110, the controller 510 may turn on the downstream magnesium pump 430 and the downstream water pump 440 so as to provide the flow of magnesium and flow of water to the downstream magnesium mixing chamber 420. The controller 520 also may open the flow control valves 490 and the check valves 500 so as to provide the downstream mixed magnesium flow 480 as needed to the second stage turbine or latter cooling air piping 82 and/or the third stage or latter cooling air piping 84 for delivery to the turbine 40. Other components and other configurations may be used herein.

The upstream magnesium mixing system 230 and the downstream magnesium mixing system 410 thus provide vanadium protection to all stages of the turbine 40. Specifically, the upstream magnesium mixing system 230 provides the flow of properly mixed magnesium in the heavy fuel oil flow 110 to the combustor 25. Likewise, the downstream magnesium mixing system 410 provides an additional flow of the mixed magnesium, when necessary, to the various downstream turbine stages via the existing air extraction system 70. The magnesium delivery systems 230, 410 thus reduce the level of hot gas path component corrosion contributable to vanadium and the like in heavy fuel oils so as to improve the overall reliability and availability of the gas turbine engine 10.

It should be apparent that the foregoing relates only to certain embodiments of the present application and the resultant patent. Numerous changes and modifications may be made herein by one of ordinary skill in the art without departing from the general spirit and scope of the invention as defined by the following claims and the equivalents thereof.

## Claims

1. A gas turbine engine (10) for combusting a flow of heavy fuel oil (110) with vanadium contaminates therein, comprising:
a combustor (25) for combusting the flow of heavy fuel oil (110);
an upstream magnesium mixing system (230) for mixing a flow of magnesium (240) with the flow of heavy fuel oil (110);
a turbine (40);
an air extraction system (70) in communication with the turbine (40); and
a downstream magnesium mixing system (410) for providing the flow of magnesium (240) to the air extraction system (70).

2. The gas turbine engine (10) of claim 1, wherein the upstream magnesium mixing system (230) comprises the flow of magnesium (240) and a flow of water (260).

3. The gas turbine engine (10) of claim 2, wherein the upstream magnesium mixing system (230) comprises an upstream magnesium mixing chamber (290).

4. The gas turbine engine (10) of claim 3, wherein the upstream magnesium mixing chamber (290) comprises an angled upstream counterflow nozzle (350) to produce an upstream mixed magnesium flow (360).

5. The gas turbine engine (10) of claim 4, wherein the upstream magnesium mixing system (230) comprises a heavy fuel oil mixing chamber (370) to mix the upstream mixed magnesium flow (360) and the flow of heavy fuel oil (110).

6. The gas turbine engine (10) of claim 5, wherein the heavy fuel oil mixing chamber (370) comprises an angled main counterflow nozzle (350) to produce a homogeneous flow (380).

7. The gas turbine engine (10) of any preceding claim, wherein the downstream magnesium mixing system (410) comprises the flow of magnesium (240) and a flow of water (260).

8. The gas turbine engine (10) of claim 7, wherein the downstream magnesium mixing system (410) comprises a downstream magnesium mixing chamber (420).

9. The gas turbine engine (10) of claim 8, wherein the downstream magnesium mixing chamber (420) comprises an angled downstream counterflow nozzle (350) to produce a downstream mixed magnesium flow (480).

10. The gas turbine engine of any preceding claim, wherein the downstream magnesium mixing system (410) comprises a vanadium sensor (175) in communication with the flow of heavy fuel oil (110).

11. The gas turbine engine (10) of any preceding claim, wherein the flow of magnesium (240) comprises a water based magnesium sulphite emulsion.

12. The gas turbine engine (10) of any preceding claim, wherein the air extraction system (70) comprises compressor section air extraction piping (72) and turbine section cooling air piping (80).

13. The gas turbine engine (10) of claim 12, wherein the downstream magnesium mixing system (410) is in communication with the turbine section cooling air piping (80).

14. The gas turbine engine (10) of claim 12 or 13, wherein the turbine section cooling air piping (80) comprises second stage turbine cooling air piping (82) and third stage cooling air piping (84).

15. A method of limiting the impact of vanadium in a flow of heavy fuel oil (110) during combustion in a gas turbine engine (10), comprising:
determining a nature of the vanadium in the flow of heavy fuel oil (110);
mixing a flow of magnesium (240) and the flow of heavy fuel oil (110);
combusting the mixed flow (380) of magnesium (240) and heavy fuel oil (110); and
injecting a further flow of magnesium (240) into a turbine (40) of the gas turbine engine (10).
